# EUROPEAN PATENT APPLICATION

(11) **EP 4 683 074 A1**
(43) Date of publication of application: **21.01.2026**
(21) Application number: 23926640.6
(22) Date of filing: 13.03.2023
(51) Int. Cl.: H01M 50/262, H01M 50/204, H01M 50/209, H01M 50/224, H01M 50/227, H01M 50/231, H01M 50/244

(54) **BATTERY PACK**

(71) Applicant: NISSAN MOTOR CO., LTD., Yokohama-shi, Kanagawa 221-0023 (JP)
(72) Inventor: OTA, Naoki, Atsugi-shi, Kanagawa 243-0123 (JP); SUENAGA, Masanori, Atsugi-shi, Kanagawa 243-0123 (JP); SAITO, Takamitsu, Atsugi-shi, Kanagawa 243-0123 (JP); DHUNGANA, Sujan, Atsugi-shi, Kanagawa 243-0123 (JP)
(74) Representative: Global IP Europe Patentanwaltskanzlei
(86) International application number: PCT/JP2023/009504
(87) International publication number: WO 2024/189716

(57) **Abstract**

A battery pack P includes a battery module M including two end plates 1 and at least one battery cell C that is arranged between the two end plates 1, and a case 2 that houses the battery module M and includes a bottom wall 3 to which the two end plates 1 are fixed. inside the case, at least a fixing part 4 fixing the bottom wall 3 and one end plate 1 of the two end plates is covered with an insulator 5, 6 having waterproof and electrical insulation properties. The battery pack P according to the above configuration, if water enters the case 2, prevents the creation of a short circuit due to ionic conduction in water.

## Description

### [Technical Field]

The present invention relates to a battery pack including a battery module in which at least one battery cell is arranged and housed in a case, and in particular to a battery pack having a function for preventing short circuit current if water enters the battery pack.

### [Background of the Invention]

An example of the above-mentioned conventional battery pack is disclosed in Patent Document 1 listed below. The battery pack disclosed in Patent Document 1 includes a plurality of battery modules that is arranged vertically and held between a pair of metal mounting parts (end plates), and a case including a bottom wall to which each of the metal mounting parts is fixed with a bolt. Between one of the metal mounting parts and the bolt, an annular insulting part including an upper cylindrical part which houses the screw head of the bolt and a lower cylindrical part through which the thread of the bolt penetrates is interposed. This allows the battery pack to prevent direct conduction between the one of the metal mounting parts and the bolt. Furthermore, if condensation water adheres to the gap between the one of the metal mounting parts and the bolt, the annular insulting part prevents a short circuit between the one of the metal mounting parts and the bolt through the condensation water.

### [Related Art Documents]

### [Patent Document]

[Patent Document 1] WO 2014 / 155995

### [Summary of the Invention]

### [Problems to Be Resolved by the Invention]

However, in conventional battery packs as described above, if water enters the case, a problem occurs in which a short circuit is created between the one of the metal mounting parts (end plates) and the screw head of the bolt due to ionic conduction in water, causing a short circuit throughout the entire battery pack, including the plurality of battery modules. The challenge was to solve this problem.

The present invention has been made in consideration of the above-mentioned problem in the conventional battery packs, and has an objective to provide a battery pack which includes a battery module including two end plates, at least one battery cell that is arranged between the two end plates, and a case that houses the battery module and includes a bottom wall to which the two end plates are fixed, in which a short circuit caused by ionic conduction in the water can be prevented if water enters the case.

### [Means of Solving the Problems]

A battery pack according to an embodiment of the present invention includes a battery module that includes two end plates and at least one battery cell that is arranged between the two end plates, and a case that houses the battery module and includes a bottom wall to which the two end plates are fixed. In the battery pack, inside the case, at least a fixing part fixing the bottom wall and one end plate of the two end plates is covered with an insulator having waterproof and electrical insulation properties.

### [Advantageous Effect of the Invention]

A battery pack according to an embodiment of the present invention includes a battery module including two end plates and at least one battery cell that is arranged between the two end plates, and a case that houses the battery module and includes a bottom wall to which the two end plates are fixed. According to the battery pack, because of having the above configuration, in the event that water enters the case, inside the case, the insulator increases the resistance of the water interposed between a fixing part that fixes the bottom wall and one end plate of the two end plates, and the one end plate as large as possible, thereby preventing the creation of a short circuit due to ionic conduction in water.

### [Brief Description of the Drawings]

FIG. 1 is a diagram illustrating a battery pack according to a first embodiment of the present invention in which a side cross-sectioned view of a battery module and an enlarged view of a main portion thereof are illustrated.
FIG. 2 is a plan view illustrating the arrangement of battery modules in the battery pack.
In FIG. 3, the upper diagram is a cross-sectional view illustrating a short circuit creating between the battery modules, and the lower diagram is a plan view illustrating a short circuit creating in the entire battery pack.
FIG. 4 is a side cross-sectional view illustrating a battery pack according to a second embodiment of the present invention.
FIG. 5 is a side cross-sectional view illustrating a relevant part of a battery pack according to a third embodiment of the present invention.

### [Description of Embodiments]

### < First Embodiments>

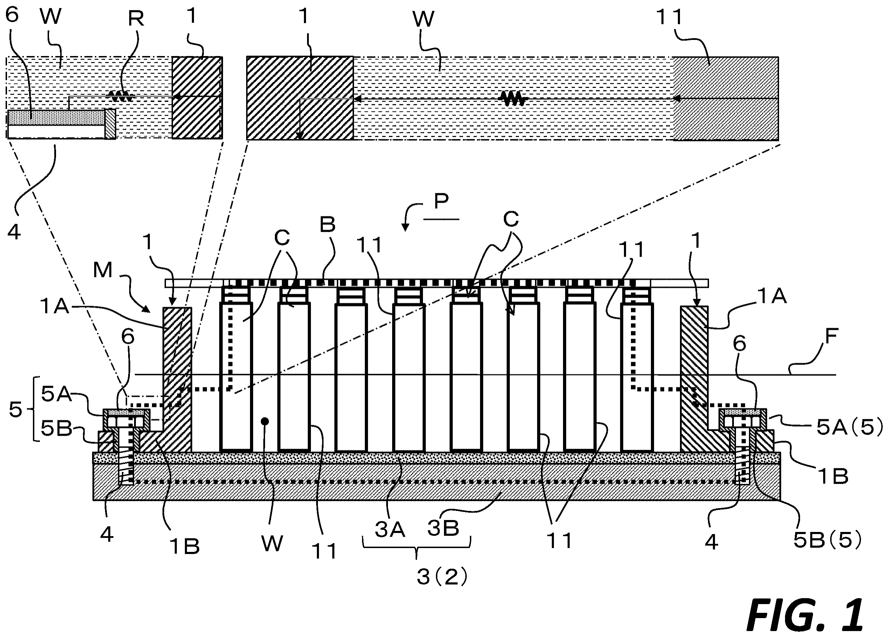

A battery pack P that is illustrated in FIG. 1 includes a battery module M includes two end plates 1, 1 and at least one battery cell C that is arranged between the two end plates 1, 1, and a case 2 that houses the battery module M and includes a bottom wall 3 to which the two end plates 1, 1 are fixed. In the battery pack P, inside the case 2, at least a fixing part that fixes the bottom wall 3 and one end plate of the two end plates 1, 1 is covered with an insulator including an insulating grommet 5 and an insulating resin potting part 6 that have waterproof and electrical insulation properties.

Each battery cell C includes an exterior body 11 (as illustrated in the enlarged view of FIG. 1) that is made of metal, has a flat shape, and houses a wound assembly or a laminated assembly that is wound or laminated a positive electrode foil and a negative electrode foil with a separator between them, as well as a negative electrode active material, etc. The battery module M has not limit to the number of the battery cells C and no restriction on the method for connecting the battery cells C. In the illustrated example, the battery module includes eight (8) battery cells C, and external terminals provided on the upper portions of respective battery cells C are connected in series by a bus bar B.

Each end plate 1 of the two end plates is made of metal, and has a vertical wall 1A that faces the battery cell C and is vertical, and a fixing wall 1B that extends from the lower end of the vertical wall 1A to the outside of the battery module M and is horizontal. A case 2, the entire shape of which is not illustrated in the drawing, includes, for example, a lower case that has a flattened box shape with an open top, and an upper case that covers the top of the lower case. The bottom wall 3 of the case 2 has a two-layer structure including an insulating resin layer 3A on the inside of the case and a metal layer 3B on the outside of the case.

The fixing part that fixes the bottom wall 3 and that the one end plate of the two end plates 1, 1 includes a bolt 4 that penetrates the fixing wall 1B of the one end plate of the two end plates 1, 1 and the insulating resin layer 3A and is screwed into the metal layer 3B. The insulator that covers the fixing part includes an insulating grommet 5 that covers the outer periphery of the screw head of the bolt 4 and is interposed between the bolt 4 and the one end plate 1, and an insulating resin potting part 6 that seals the top edge of the insulating grommet 5 and covers the upper surface of the screw head of the bolt 4.

The insulating grommet 5 includes a large diameter portion 5A that receives the screw head of the bolt 4 and a small diameter portion 5B through which the thread of the bolt 4 penetrate, and the lower end of the small diameter portion reaches the insulating resin layer 3A of the bottom wall 3. The insulating grommet 5 includes a continuous portion between the large diameter portion 5A and the small diameter portion 5B. The continuous portion is brought into close contact with the one end plate 1 and the one end plate 1 is fixed to the bottom wall 3 by applying the fastening force of the bolt 4. At the same time, the lower end of the small diameter portion 5B is tightly adhered to the insulating resin layer 3A, which ensures water-tightness between the small diameter portion and the insulating resin layer. The insulating resin potting part 6 fits into the inside of the upper portion of the large diameter portion 5A of the insulating grommet 5 without any gaps, and the outer periphery of the insulating resin potting part 6 is tightly adhered to the large diameter portion 5A to ensure water-tightness between the insulating resin potting part and the large diameter portion.

The insulating resin potting part 6 only needs to be made of a material that has at least waterproof and electrical insulating properties, and more preferably, examples of the material of the insulating resin potting part 6 include, but are not limited to, urethane resin potting, silicone resin potting, and epoxy resin potting.

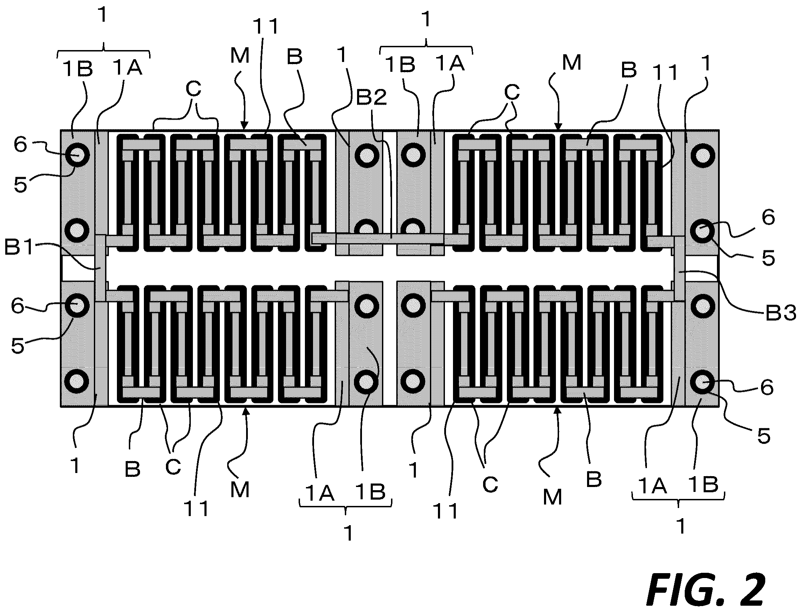

As illustrated in FIG. 2, the above-described battery pack P can include a plurality of the battery modules M. In the illustrated example, four (4) battery modules M are arranged in a longitudinal direction and a crosswise direction. The battery cells C, C at the ends of the battery modules M illustrated on the upper and the lower of the left side of the diagram are connected to each other by a first bus bar B1. The battery cells C, C at the ends of the battery modules M, M illustrated on the left and the right of the upper side of the diagram are connected to each other by a second bus bar B2. The battery cells C, C at the ends of the battery modules M, M on the upper and the lower of the right side of the diagram are connected to each other by a third bus bar B3.

As above, in FIG. 2, the battery modules M are connected in series and clockwise from the lower left battery module M to the lower right battery module M. In the battery modules M, M illustrated on the lower left and right of FIG. 2, the battery cells C, C at the middle line side of the battery pack P are connected to a connector for extracting electricity to the outside through a bus bar or a harness, which are not illustrated.

In the battery module M of the battery pack P having the above configuration, in the event that water enters the case 2 as illustrated a water surface F in FIG. 1, if the insulating resin potting part 6 were not provided and the screw head of the bolt 4 were exposed, a short circuit would occur due to ionic conduction of the water W (including salt water) intervening between the one end plate 1 and the bolt 4.

In the above battery module M, a short circuit would also occur due to ionic conduction of the water W intervening between the one end plate 1 and the battery cell C adjacent to the one end plate 1. As a result, a short circuit as illustrated by a dotted line in FIG. 1, would be created from a bolts 4 at a first end, for example, on the right side in FIG 1, passing in the order of water W, the one end plates 1, water W, the battery cell C at a first end, the bus bar B and the battery cells C, C connected by the bus bar B, the battery cell C at a second end, water W, the other end plate 1, water W, a bolts 4 at a second end, for example, on the left side in FIG. 1, and the metal layer 3B of the bottom wall 3, to the bolt 4 at the first end. At this time, in the battery cells C, C at both ends, a short circuit would occur through the respective exterior bodies 11 made of metal, but as this is not directly related to the present invention, a detailed description will be omitted.

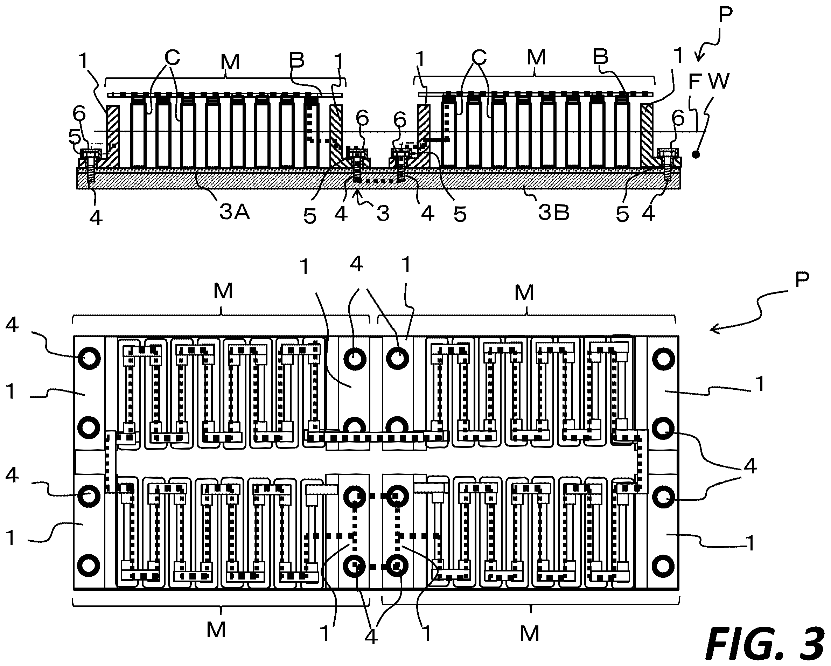

In addition, since, as illustrated in FIG. 2, the battery pack P that has the above configuration includes four (4) battery modules M that are arranged in a longitudinal direction and a crosswise direction, as illustrated in the lower diagram of FIG. 3, a short circuit (, that is illustrated by a dotted line,) is created through all of the battery modules M. At this time, as illustrated in the upper diagram of FIG. 3, a short circuit path is created between the battery modules M, M illustrated on the lower left and the lower right of the lower diagram of FIG. 3, from a bolt 4 of one battery module, through the metal layer 3B of the bottom wall 3, to a bolt 4 of the other battery module, as illustrated by a dotted line.

In contrast, with the battery pack according to the above embodiment of the present invention, in the battery module M, inside the case 2, at least the bolt 4 which is included in the fixing part that fixes the bottom wall 3 and the one end plate 1 is covered with an insulator including an insulating grommet 5 and an insulating resin potting part 6, so that short circuits due to ionic conduction in water between the respective end plates 1 and the bolts 4 that fixes the bottom wall3 and the respective end plates 1 are blocked.

That is, in the above battery modules M, the insulator (including the insulating grommets 5 and the insulating resin potting part 6) which covers the fixing part maximizes the ionic conduction resistance R in water between the one end plate 1 and the bolt 4. This makes it possible to block short circuits caused by ionic conduction in water in the entire battery pack P.

As described above, the above-described battery pack P includes a battery module M including two end plates 1, 1, at least one battery cell C that is arranged between the two end plates 1, 1, and a case 2 that houses the battery module M and includes a bottom wall 3 to which the two end plates 1 are fixed. According to the battery pack P, if water enters the case 2, the creation of short circuit due to ionic conduction in water can be blocked. In this way, this battery pack not only obviously prevents from short circuits due to condensation water, but also has improved functionally to prevent short circuit current caused by ingress of water to the case.

Furthermore, the above-described battery pack P includes the fixing part including the bolt 4 that penetrates the one end plate 1 of the two end plates and the insulating resin layer 3A and is screwed into the metal layer 3B, and further includes the insulator including the insulating grommet 5 and the insulating resin potting part 6. By incorporating the above configuration, the battery pack, with a relatively simple configuration, can completely block ionic conduction in water between the one end plate 1 and the bolt 4 to reliably prevent the creation of short circuits.

Additionally, in the above-described battery pack P, as the lower end of the insulating grommet 5 reaches the insulating resin layer 3A, even if water enters the case, water-tightness can be ensured between the one end plate 1 and the bolt 4, and between the one end plate 1 and the bottom wall 3. This allows the bolt 4, which is generally made of metal, to be protected from water.

Furthermore, in the above-described battery pack P, the insulator includes the insulating resin potting part 6 that is made of any one of urethane resin potting, silicone resin potting, and epoxy resin potting. This further improves the water-tightness and electrical insulation properties of the battery pack. The insulating potting part 6 is tightly attached to the insulating grommet 5 without any gaps, thereby ensuring sufficient water-tightness between the insulating grommet 5 and the insulating potting part 6.

### < Second Embodiment >

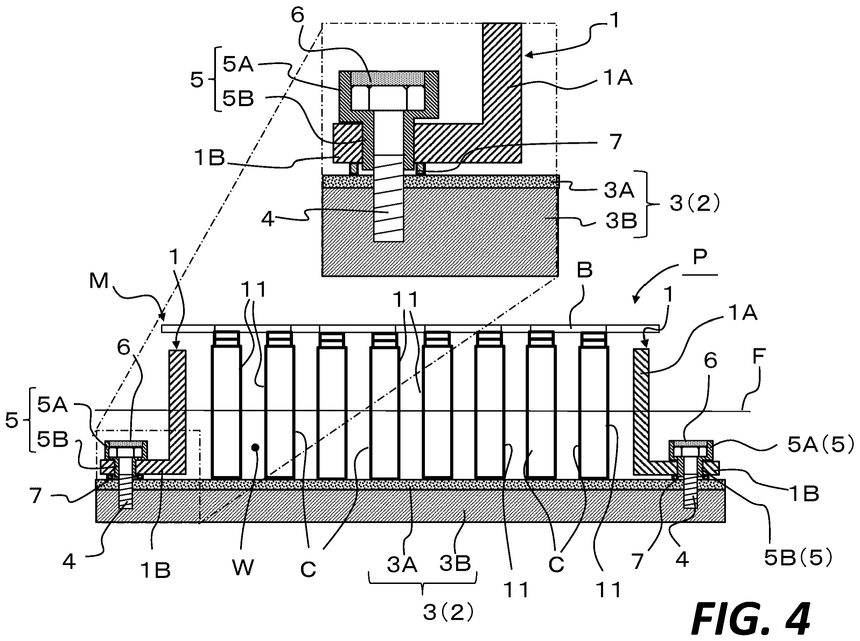

FIG. 4 is a diagram illustrating a battery pack according to a second embodiment of the present invention. In the following description of the battery pack according to the second embodiment of the present invention, components equivalent to those in the first embodiment will be given the same reference signs as those in the first embodiment, and detailed descriptions thereof will be omitted.

The battery pack P which is illustrated in FIG. 4 has the same basic configuration as the battery pack according to the first embodiment of the present invention, and further includes an insulating ring 7 that is disposed between the one end plate 1 of the two end plates and the bottom wall 3, surrounds the bolt 4, and is to be pressed to be squashed between the lower end of the one end plate 1 and the bottom wall 3. The material of the insulating ring 7 is not limited, but may be made of the same material as the insulating grommet 5, for example.

The battery pack P having the above configuration can prevent the creation of short circuits due to ionic conduction in water if water enters the case 2, similar to the battery pack according to the first embodiment. In the battery pack P, in particular, as the insulating ring 7 is used when the bolt 4 is screwed into the metal layer 3B of the bottom wall 3, the structure for fixing the one end plate 1 and the bottom wall 3, and the structure for ensuring water-tightness between the insulating grommet 5 and the one end plate 1, between the one end plate 1 and the insulating ring 7, and between the insulating ring 7 and the bottom wall 3 are arranged coaxially. This allows the battery pack both to fix the one end plate 1 and the bottom wall 3 and to ensure water-tightness described above simultaneously.

In addition, in the battery pack according to the above embodiment of the present invention, the insulating grommet 5 is attached so that the lower end of the small diameter portion 5B of the insulating grommet 5 is lower than the lower surface of the fixing wall 1B of the one end plate 1, thereby ensuring insulation and water-tightness between the fixing wall 1B and the bolt 4. Furthermore, in the battery pack according to the above embodiment of the present invention, the inner diameter of the insulating ring 7 is made larger than the outer diameter of the small diameter portion 5B, and the insulating ring 7 is squashed between the fixing wall 1B and the bottom wall 3 to be firmly pressed against both the fixing wall 1B and the bottom wall 3. This further improves the water-tightness between the fixing wall 1B and the bottom wall 3. According to the battery pack having a configuration in which the insulating ring 7 is squashed as described above, the components such as the insulating grommet 5 are not required to have the extremely small dimensional tolerances.

### < Third Embodiment >

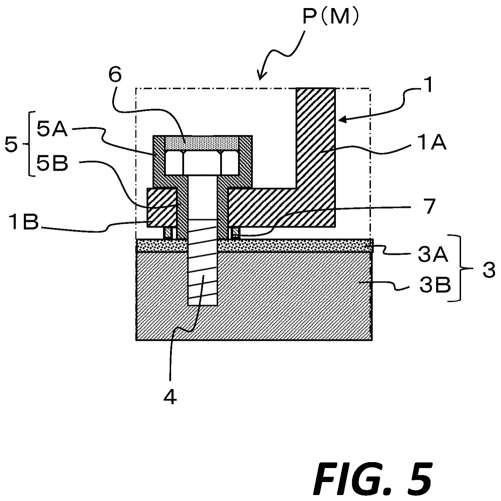

FIG. 5 is a diagram illustrating a battery pack according to a third embodiment of the present invention. The battery pack P, the main part of which is illustrated in FIG. 5, includes the insulating ring 7 that was described in the section for the second embodiment, and further includes an insulating grommet 5 in which a lower end of a small diameter portion 5B reaches the insulating resin layer 3A of the bottom wall 3.

According to the battery pack having the above configuration, the insulating ring 7 is squashed between the fixing wall 1B of the one end plate 1 and the bottom wall 3, and at the same time the small diameter portion 5B of the insulating grommet 5 is squashed in the axis direction thereof. This forms a double seal structure by the small diameter portion 5B and the insulating ring 7. As a result, both the insulation and water-tightness between the fixing wall 1B and the bolt 4, and between the fixing wall 1B and the bottom wall 3 can be further improved.

A battery pack according to the present invention is not limited to the above-described embodiments, and can be modified appropriately without departing from the gist of the present invention. For example, by using end plates made of insulating resin, it is possible to further enhance the effect of preventing short circuits caused by ion conduction in water.

### [Reference Signs List]

- C: battery cell
- M: battery module
- 1: end plate
- 2: case
- 3: bottom wall of case
- 3A: insulating resin layer
- 3B: metal layer
- 4: bolt (fixing part)
- 5: insulating grommet (insulator)
- 6: insulating resin potting part (insulator)
- 7: insulating ring
- 11: exterior body

## Claims

1. A battery pack comprising:
a battery module including two end plates and at least one battery cell that is arranged between the two end plates, and
a case that houses the battery module, and includes a bottom wall to which the two end plates are fixed,
wherein
inside the case, at least a fixing part fixing the bottom wall and one end plate of the two end plates is covered with an insulator having waterproof and electrical insulation properties.

2. The battery pack according to Claim 1,
wherein
the bottom wall includes an insulating resin layer on an inside of the case and a metal layer on an outside of the case,
the fixing part includes a bolt that penetrates the one end plate and the insulating resin layer and is screwed into the metal layer, and
the insulator includes an insulating grommet that covers an outer periphery of a screw head of the bolt and is interposed between the bolt and the one end plate, and an insulating resin potting part that seals a top edge of the insulating grommet and covers an upper surface of the screw head of the bolt.

3. The battery pack according to Claim 2, further comprising
an insulating ring that is disposed between the one end plate and the bottom wall, surrounds the bolt, and is squashed between the one end plate and the bottom wall.

4. The battery pack according to Claim 2 or 3,
wherein
a lower end of the insulating grommet reaches the insulating resin layer.

5. The battery pack according to Claim 1,
wherein
the insulating resin potting part is made of any one selected from the group consisting of urethane resin potting, silicone resin potting, and epoxy resin potting.
